# EUROPEAN PATENT APPLICATION

(11) **EP 2 224 392 A1**
(43) Date of publication of application: **01.09.2010**
(21) Application number: 09154013.8
(22) Date of filing: 27.02.2009
(51) Int. Cl.: G06Q 30/00

(54) **Identification and purchase of broadcast work with handheld electronic device**

(71) Applicant: RESEARCH IN MOTION LIMITED, Waterloo, Ontario N2L 3W8 (CA)
(72) Inventor: Lowles, Robert, Waterloo, Ontario N2L 3W8 (CA)
(74) Representative: Roberts, Gwilym Vaughan

(57) **Abstract**

The disclosed and claimed concept relates generally to handheld electronic devices and, more particularly, to a method for identifying and purchasing an audio work played over broadcast service without the user needing to provide information to identify the work (e.g., artist, singer, title, etc.).

## Description

### BACKGROUND

### Field

The disclosed and claimed concept relates generally to handheld electronic devices and, more particularly, to a method for identifying and purchasing an audio work played over a broadcast service.

### Description of the Related Art

There are various methods known in the art for purchasing audio works such as music, ringtones, audio books and programs, and the like. These methods typically require the purchaser to know the identifying information such as the author, singer, artist, and/or title of the work. For example, the purchaser can use a personal computer (PC) to connect to a network such as the Internet, to access a web site that sells a digital copy of the work; enter the necessary information to identity the work; supply the necessary payment information (e.g., valid credit card number); and download a digital copy of the work from the web site to the PC. The purchaser can then play the audio work on the PC or transfer the music to a digital player using a conventional format for downloadable audio information, such as the MPEG-1 Level 3 Digital Audio Standard, (referred to as MP3).

Further, it is known to provide kiosks in public places such as restaurants, coffee shops, etc. from which a purchaser can obtain digital versions of audio works for download directly to a portable player carried by the purchaser, such as a MP3 player or iPod. This purchase method, like the above-mentioned method, requires the purchaser to provide information to identify the work, connect to a network to obtain the work, and supply payment information to pay for the work via the network.

Often, a person while listening to an audio broadcast hears a work or a portion thereof and would like to purchase the work but does not know the information necessary to identify the work (e.g., artist title or the like). Based on the systems and methods known in the art, the user would be unable to make the purchase. Thus, there is a need for a system and method that enables a person to purchase an audio work played for broadcast without the need to provide the information to identify the work. Further, it would be desirable if such a purchase could be conducted from a handheld electronic device. Moreover, it would be desirable if the purchase digital work could be played on the handheld electronic device.

### BRIEF DESCRIPTION OF THE DRAWINGS

A full understanding of the disclosed and claimed concept can be obtained from the following Description when read in conjunction with the accompanying drawings in which:

Fig. 1 is illustrates a system in which a consumer initiates a purchase of an audio work to which the consumer is listening at the time he or she initiates the purchase; and

Fig. 2 is a block diagram of the method for obtaining the information necessary to identify the audio work, generating a digital version of the work and purchasing of the work by a user that heard the broadcast of the audio work.

Similar numerals refer to similar parts throughout the specification.

### SUMMARY

The claimed concept includes a method for identifying and purchasing an audio work. The method includes receiving radio data; using the radio data to identify the audio work; downloading an electronic version of the audio work; and effecting a payment for the electronic version of the audio work. The claimed concept further includes performing at least a portion of the method for identifying and purchasing the audio work, using a handheld electronic device.

### DESCRIPTION

The disclosed and claimed concept relates to a method for identifying and purchasing an audio work played over a broadcast service. As used herein, the term "work" refers to an audio media transmission such as but not limited to a song, ringtone, audio book, interview, audio program, advertisement and the like. The term "broadcast service" as used herein refers to commercial broadcast radio, private radio network, analog radio station, digital audio broadcasting (DAB) system, satellite audio broadcasts, Internet audio broadcasts or any other suitable medium capable of transmitting a signal representing audio content.

It is commonplace for a listener to receive analog and digital radio broadcasts on an analog or digital radio such as for example a radio installed in an automobile. Further, it is generally known in the art for a listener to receive analog and digital radio broadcasts on a handheld electronic device such as, for example, a mobile telephone, personal data assistant (PDA), handheld computer, two-way pager, and the like. The radio station that broadcasts the audio work may not supply the information necessary to identify the work, such as the title or artist. A person listening to the radio broadcast may want to purchase a digital copy of a particular audio work that is played. In accordance with the disclosed and claimed concept, the listener can request and receive a digital copy of the work without knowing the information necessary to identify the work. The listener can provide a simple input to the radio or handheld device to request the identifying information for a broadcasted audio work. The input may include entering a command such as but not limited to pressing a "REQUEST" button located on the listening device. Pressing the button causes the listening device to transmit a request to a remote server. The transmission can be accomplished via any suitable medium such as a radio communication link or computer network. In an embodiment, the remote server of the radio station broadcasting the requested work is accessed. It is known that FM radio signals and other radio broadcasting systems often incorporate data signals into the broadcast of audio media. The incorporation of such data signals is often referred to as "radio data"; specifically, Radio Data System (RDS) or Radio Broadcast Data System (RBDS). The radio data can include station identification. RDS and RBDS are nonlimiting examples of the wide variety of forms of station identification that are known in the art. Further, the radio data can include program types, title, author/artist/singer, and time stamp. The time stamp can correlate the time and date when an audio work is broadcasted with the database of the broadcaster to obtain the information needed to identify the work. The radio data can identify a compact disc (CD) or a MP3 file which contains the audio work.

Thus, via a connection between the listening device (e.g., radio or handheld electronic device) and the remote server, the information necessary to identify a broadcast station and an audio work broadcasted by the station can be extracted from the radio data. The identifying information can be used by the listener to identify, locate, download and subsequently purchase an electronic version of the audio work. For example, the identifying information can be provided back to the listener via a display on the listening device and the listener can use the identifying information to obtain a digital copy of the audio work. The listener may use the handheld electronic device or a personal computer to obtain a wired or wireless network connection to a computer network such as the Internet; access a web site having an e-commerce web service or business for providing digital copies of audio works; enter the identifying information on the web site to search and find the audio work, download a digital copy of the audio work to a computer network or an electronic mail system, and effect payment for the digital copy via the computer network (such as but not limited to an e-commerce web site). The disclosed and claimed concept anticipates that the payment transaction may need to be completed prior to downloading the work. Further, it is anticipated that there may be an authentication procedure included in the payment process. Thus, in addition to supplying a credit card number to effect payment additional information may be needed to confirm authorization of the listener to charge the credit card and to receive the work. Further, various payment arrangements can be anticipated. The listener can pay for each work at the time it is downloaded or, billed monthly based on the quantity of requests and purchases effected by the listener during the month (or other specified time period) or, billed in accordance with a subscription fee such that a flat fee is paid to purchase as many (whereby a maximum may be imposed) audio works as desired during a month (or other specified time period).

The identifying information, may also be provided back to the listener via an electronic mail system which sends a communication to the listener. In this situation, the listener could obtain the audio work by logging onto a personal computer to access the electronic mail system and then subsequently use the identifying information provided in the electronic mail communication to obtain a digital copy of the audio work from a computer network or web site as described above. It is anticipated that the electronic mail system could include a link to a particular web site or service whereby the listener will be directly connected to the site upon clicking on the link.

The identifying information may be provided to a party other than the listener who requested the audio work. For example, the identifying information may be provided to a web site or web service which operates to sell digital copies of a wide variety of works. In addition to the broadcast server providing the radio data to identify the audio work, the broadcast server could also provide information relating to the listener such that the listener can be contacted by the web site web service. The listener could receive an email from the web site or web service having a link (as described above) whereby the listener may be directly connected in order to effect download and payment of a digital copy of the audio work. The digital copy may be downloaded to a computer network or an electronic mail system.

Further, the identifying information can be provided to the service provider of the handheld electronic device via a computer network, such as but not limited to the Internet. The service provider then can transmit the identifying information to directly to the listener or to a network server (or web site residing on the server) via a computer network. If transmitted directly to the listener, an electronic mail system can send an electronic mail message to the listener's account on the handheld electronic device, the listener can obtain a digital copy of the work by accessing the computer network or web site, or the service provider can provide a link in the email which can directly connect the listener to the digital copy of the audio work; or if transmitted to server, the server can employ a system to search for the work, make a digital copy of the work and electronically transmit the work to the user via the computer network or electronic mail system. Further, in either embodiment, the service provider can bill the user directly.

The identifying information may also be used directly by the broadcasting service provider that generates the radio data used to identify the audio work. In this situation, upon obtaining the identifying information, the radio server could send the listener an electronic mail message which is received by a computer network. The computer network could be accessible via the Internet. The electronic mail message may contain a link (as described above). When the link is clicked, the listener could be connected with a portion of the radio station's web site that allows the listener to supply the necessary payment information to purchase a digital copy of the work.

In another embodiment, the identifying information could be added to a list of personal favorites of the listener located on a computer network, such as but not limited to the Internet or an e-commerce web site. For example, the identifying information can be transmitted to the listener's handheld electronic device or personal computer (via email address) and stored in a memory or other storage means. The listener can then access the list and purchase a digital copy of any audio work on the list, which will remain on the list for a specified and/or extended period of time, or the listener may delete an audio work from the list as desired. It is anticipated in this embodiment, that the service provider of the list may effectuate a payment merely for adding the audio work to the list in response to a request from the listener even if the audio work is not ultimately purchased by the listener.

The digital copy of the audio work can be downloaded to a PC and played on the PC or, the listener can transfer the digital copy of the audio work from the PC to a digital player. The digital player can be a portable player such as but not limited to a MP3 player or iPod. In another embodiment, the digital copy or the audio work can be downloaded and played on the receiving device from which the listener originally heard the broadcast of the audio work. The digital copy of the audio work can be downloaded and played on a handheld electronic device such as but not limited to a mobile telephone, PDA, handheld computer, two-way pager and the like.

In an aspect of the claimed and disclosed concept, a security system or authentication process can be included in the payment transaction. Thus, when the listener purchases a digital copy of the audio work, the listener may be requested to provide information that is personal to the listener and not generally known in order to verify the identity of the listener and to approve the authority of the listener to use a payment method such as a credit or debit card.

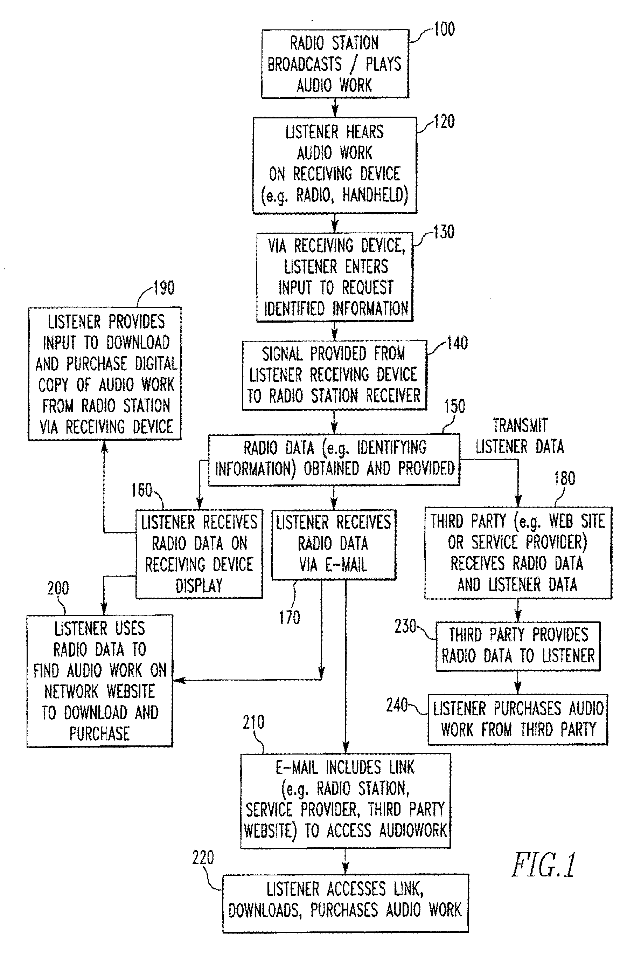

Fig. 1 is a flow chart which illustrates a system wherein a consumer initiates a purchase of an audio work to which the consumer is listening at the time he or she initiates the purchase. In block 100, an analog or digital radio station can broadcast an audio work such as a song , interview, advertisement, or the like. In block 120, the listener hears the broadcast of the audio work via a receiving device such as an analog or digital radio or a handheld electronic device. In block 130, the listener can provide input to the receiving device to request information to identify the audio work. The identifying information can include singer, title, artist, author, and the like. The input can be provided using a wide variety of mechanisms. As shown in block 140, a signal can be provided from the listener receiving device to the radio station receiver. For example, the listener can depress a button on the receiving device, whereby the button is operable to transmit an outgoing signal from the listener's receiving device to a radio station receiver. In block 150, the radio station receiver can be adapted to obtain the radio data corresponding to the broadcast of the selected audio work. The radio data which includes the identifying information for the audio work can be provided to various sources. In blocks 160 and 170, the radio data can be provided back to the listener who requested the information. Alternatively, in block 180, the radio data can be provided to a third party such as but not limited to a web site or service provider.

As shown in block 160, when provided back to the listener, the radio data can be received by the listener on an output display located on the listener's receiving device (e.g., radio or handheld electronic device). In block 190, the listener then may provide input to download and purchase a digital copy of the audio work from the radio station using the receiving device. For example, a request button or link may be located on the receiving device that when activated, the request button or link transmits a signal to the radio station receiver, and the receiver processes the request signal, causing a digital copy of the audio work to be provided to the listener via the receiving device. The listener can then purchase (e.g., effect payment) and download the digital copy. As shown in block 200, alternatively, the listener can use the radio data on the receiving device display to find the audio work on a network web site, download a digital copy of the audio work and make the purchase from the web site.

In another embodiment, as shown in block 170, the radio data can be provided to the listener via an electronic mail from the radio station to the listener's PC. In block 200, the listener can use the radio data to find the audio work on a network web site, download a digital copy of the audio work and make the purchase from the web site. In another embodiment, as shown in blocks 210 and 220, the listener can access a link provided in the electronic mail (e.g., by the radio station, service provider or third party web site) to access the audio work, download and purchase the audio work.

In another embodiment, as shown in block 180, the radio data and listener data can be provided to a third party such as a web site or service provider. The listener data can include the listener's email address or the like. In block 230, the third party can in turn provide the radio data two the listener. The listener may, for example, receive an electronic mail message atom the third party. The mail message may include a link whereby the listener can access the audio work and download a digital copy. In block 240, the listener then can purchase the audio work from the third party.

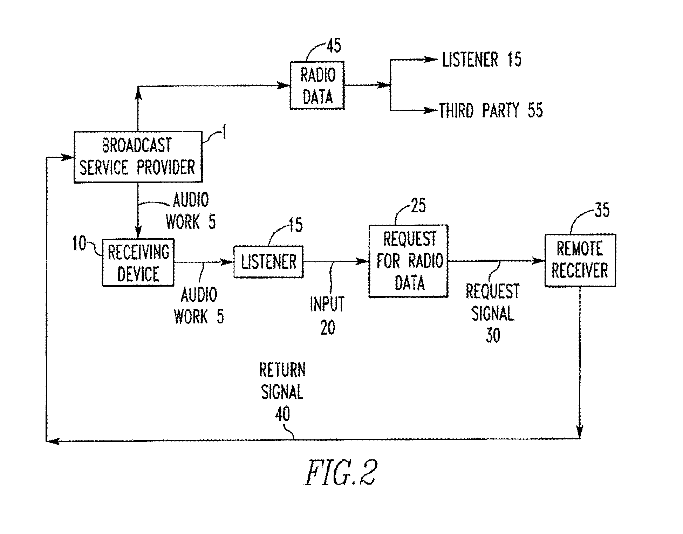

As illustrated by the block diagram in FIG. 2, a broadcast service provider 1 such as an analog or digital radio station can transmit an audio work 5 to a receiving device 10 such as a analog or digital radio or a handheld electronic device. The receiving device 10 plays the audio work 5 to be heard by a listener 15. The listener 15 provides input 20 to request radio data 25 to identify the audio work. As a result, a request signal 30 is transmitted to a remote receiver 35. The receiver 35 transmits a return signal 40 to the broadcast service 1. In response to the return signal 40, the broadcast service 1 extracts the radio data 45 and provides it to the listener 50 or a third party 55. The listener 15 can then use the radio data to download and purchase the audio work. The third party can use the radio data to effectuate a purchase from the listener 15.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. A method for identifying and purchasing an audio work, said method comprising:
receiving radio data;
using radio data to identify the audio work;
downloading a digital copy of the audio work; and
purchasing the digital copy of the audio work.

2. The method of claim 1 wherein the audio work is a song.

3. The method of claim 1 wherein the radio data is selected from the group consisting of time stamp, artist, author, singer and title, of the audio work.

4. The method of claim 1 wherein the audio work is played over an audio broadcast service.

5. The method of claim 4 wherein the audio broadcast service is selected from the group consisting of AM broadcast stations, FM broadcast stations, digital audio broadcasts, satellite audio broadcasts and Internet audio broadcasts.

6. The method of claim 4 wherein the audio broadcast service receiving device is a handheld electronic device.

7. The method of claim 4 wherein the radio data is received by an audio broadcast service provider.

8. The method of claim 1 wherein the radio data is received by a computer network.

9. The method of claim 8 wherein the computer network is accessible via the Internet.

10. The method of claim 9 wherein the computer network is an e-commerce web service.

11. The method of claim 1 wherein the digital copy of the audio work is downloaded to a computer network.

12. The method of claim 1 wherein the digital copy of the audio work is downloaded to an electronic mail system.

13. The method of claim 10 wherein the digital copy of the audio work is received on a handheld electronic device.

14. The method of claim 12 further comprising the step of authenticating the listener as authorized to receive and purchase the digital copy of the audio work.

## Amended claims

### Amended claims in accordance with Rule 137(2) EPC.

**1.** A method for identifying and purchasing an audio work, said method comprising:
requesting from a listening device, identifying information of a broadcasted audio work;
receiving radio data;
using radio data to identify the audio work;
providing the identifying information to the user of the listening device
downloading a digital copy of the audio work; and
purchasing the digital copy of the audio work.

**2.** The method of claim 1 wherein the audio work is a song.

**3.** The method of claim 1 wherein the radio data is selected from the group consisting of time stamp, artist, author, singer and title, of the audio work.

**4.** The method of claim 1 wherein the audio work is played over an audio broadcast service.

**5.** The method of claim 4 wherein the audio broadcast service is selected from the group consisting of AM broadcast stations, FM broadcast stations, digital audio broadcasts, satellite audio broadcasts and Internet audio broadcasts.

**6.** The method of claim 4 wherein the audio broadcast service receiving device is a handheld electronic device.

**7.** The method of claim 4 wherein the radio data is received by an audio broadcast service provider.

**8.** The method of claim 1 wherein the radio data is received by a computer network.

**9.** The method of claim 8 wherein the computer network is accessible via the Internet.

**10.** The method of claim 9 wherein the computer network is an e-commerce web service.

**11.** The method of claim 1 wherein the digital copy of the audio work is downloaded to a computer network.

**12.** The method of claim 1 wherein the digital copy of the audio work is downloaded to an electronic mail system.

**13.** The method of claim 10 wherein the digital copy of the audio work is received on a handheld electronic device.

**14.** The method of claim 12 further comprising the step of authenticating the listener as authorized to receive and purchase the digital copy of the audio work.

## Amended claims

### Amended claims in accordance with Rule 137(2) EPC.

**1.** A method for identifying and purchasing an audio work, said method comprising:
requesting from a listening device, identifying information of a broadcasted audio work;
receiving radio data;
using radio data to identify the audio work;
adding the identified audio work to a list;
downloading to the listening device a digital copy of an audio work on the list; and
purchasing from the listening device the digital copy of the audio work.

**2.** The method of claim 1 wherein the audio work is a song.

**3.** The method of claim 1 wherein the radio data is selected from the group consisting of time stamp, artist, author, singer and title, of the audio work.

**4.** The method of claim 1 wherein the audio work is played over an audio broadcast service.

**5.** The method of claim 4 wherein the audio broadcast service is selected from the group consisting of AM broadcast stations, FM broadcast stations, digital audio broadcasts, satellite audio broadcasts and Internet audio broadcasts.

**6.** The method of claim 4 wherein the audio broadcast service receiving device is a handheld electronic device.

**7.** The method of claim 4 wherein the radio data is received by an audio broadcast service provider.

**8.** The method of claim 1 wherein the radio data is received by a computer network.

**9.** The method of claim 8 wherein the computer network is accessible via the Internet.

**10.** The method of claim 9 wherein the computer network is an e-commerce web service.

**11.** The method of claim 1 wherein the digital copy of the audio work is downloaded to a computer network.

**12.** The method of claim 1 wherein the digital copy of the audio work is downloaded to an electronic mail system.

**13.** The method of claim 10 wherein the digital copy of the audio work is received on a handheld electronic device.

**14.** The method of claim 12 further comprising the step of authenticating the listener as authorized to receive and purchase the digital copy of the audio work.

## Amended claims

### Amended claims in accordance with Rule 137(2) EPC.

**1.** A method for identifying and purchasing an audio work, said method comprising:
requesting from a listening device, identifying information of a broadcasted audio work;
receiving radio data;
using the radio data to identify the audio work;
receiving listener data;
using the listener data to identify the listener;
providing the identifying information to the identified listener;
downloading a digital copy of the audio work; and
purchasing the digital copy of the audio work.

**2.** The method of claim 1 wherein the audio work is a song.

**3.** The method of claim 1 wherein the radio data is selected from the group consisting of time stamp, artist, author, singer and title, of the audio work.

**4.** The method of claim 1 wherein the audio work is played over an audio broadcast service.

**5.** The method of claim 4 wherein the audio broadcast service is selected from the group consisting of AM broadcast stations, FM broadcast stations, digital audio broadcasts, satellite audio broadcasts and Internet audio broadcasts.

**6.** The method of claim 4 wherein the audio broadcast service receiving device is a handheld electronic device.

**7.** The method of claim 4 wherein the radio data is received by an audio broadcast service provider.

**8.** The method of claim 1 wherein the radio data is received by a computer network.

**9.** The method of claim 8 wherein the computer network is accessible via the Internet.

**10.** The method of claim 9 wherein the computer network is an e-commerce web service.

**11.** The method of claim 1 wherein the digital copy of the audio work is downloaded to a computer network.

**12.** The method of claim 1 wherein the digital copy of the audio work is downloaded to an electronic mail system.

**13.** The method of claim 10 wherein the digital copy of the audio work is received on a handheld electronic device.

**14.** The method of claim 12 further comprising the step of authenticating the listener as authorized to receive and purchase the digital copy of the audio work.

## Amended claims

### Amended claims in accordance with Rule 137(2) EPC.

**1.** A method for identifying and purchasing an audio work, said method comprising:
requesting from a handheld electronic device, identifying information of a broadcasted audio work;
receiving radio data at the service provider of the handheld electronic device;
using the radio data to identify the audio work;
providing the identifying information to the user of the handheld electronic device;
downloading a digital copy of the audio work; and
purchasing the digital copy of the audio work.

**2.** The method of claim 1 wherein the audio work is a song.

**3.** The method of claim 1 wherein the radio data is selected from the group consisting of time stamp, artist, author, singer and title, of the audio work.

**4.** The method of claim 1 wherein the audio work is played over an audio broadcast service.

**5.** The method of claim 4 wherein the audio broadcast service is selected from the group consisting of AM broadcast stations, FM broadcast stations, digital audio broadcasts, satellite audio broadcasts and Internet audio broadcasts.

**6.** The method of claim 4 wherein the radio data is received by an audio broadcast service provider.

**7.** The method of claim 1 wherein the radio data is received by a computer network.

**8.** The method of claim 7 wherein the computer network is accessible via the Internet.

**9.** The method of claim 8 wherein the computer network is an e-commerce web service.

**10.** The method of claim 1 wherein the digital copy of the audio work is downloaded to a computer network.

**11.** The method of claim 1 wherein the digital copy of the audio work is downloaded to an electronic mail system.

**12.** The method of claim 9 wherein the digital copy of the audio work is received on a handheld electronic device.

**13.** The method of claim 11 further comprising the step of authenticating the listener as authorized to receive and purchase the digital copy of the audio work.
